(19) Europäisches Patentamt
European Patent Office
Office européen des brevets

(11) **EP 3 187 242 B1**

(12) **EUROPEAN PATENT SPECIFICATION**

(45) Date of publication and mention
of the grant of the patent:
**21.11.2018 Bulletin 2018/47**

(51) Int Cl.:
**B01D 53/14** [(2006.01)]   **B01D 53/62** [(2006.01)]
**C01B 32/50** [(2017.01)]   **B01D 53/78** [(2006.01)]
**F23J 15/04** [(2006.01)]

(21) Application number: **15819384.7**

(22) Date of filing: **19.06.2015**

(86) International application number:
**PCT/JP2015/067752**

(87) International publication number:
**WO 2016/006416 (14.01.2016 Gazette 2016/02)**

(54) **CO2 RECOVERY UNIT AND CO2 RECOVERY METHOD**

CO2-RÜCKGEWINNUNGSVORRICHTUNG UND CO2-RÜCKGEWINNUNGSVERFAHREN

DISPOSITIF DE RÉCUPÉRATION DE CO2 ET PROCÉDÉ DE RÉCUPÉRATION DE CO2

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.07.2014 JP 2014142554**

(43) Date of publication of application:
**05.07.2017 Bulletin 2017/27**

(73) Proprietor: **Mitsubishi Heavy Industries
Engineering, Ltd.
Nishi-ku
Yokohama-shi
Kanagawa 220-8401 (JP)**

(72) Inventors:
• **NAKAGAWA, Yosuke**
**Tokyo 108-8215 (JP)**
• **SHIMADA, Daisuke**
**Tokyo 108-8215 (JP)**
• **TSUJIUCHI, Tatsuya**
**Tokyo 108-8215 (JP)**

(74) Representative: **Studio Torta S.p.A.
Via Viotti, 9
10121 Torino (IT)**

(56) References cited:
JP-A- 2011 057 485    JP-A- 2012 035 214
JP-A- 2012 152 731    JP-A- 2013 158 685
JP-A- 2014 004 525    US-A1- 2010 319 531
US-A1- 2012 167 760

EP 3 187 242 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a $CO_2$ recovery unit and a $CO_2$ recovery method, and particularly to a $CO_2$ recovery unit and a $CO_2$ recovery method that recover $CO_2$ in a gas to be treated, using a $CO_2$-absorbing solution.

Background Art

In the related art, $CO_2$ recovery units that recover $CO_2$ exhausted from boilers or the like of thermoelectric power plants are suggested (for example, refer to PTL 1) . In the $CO_2$ recovery units, flue gas is introduced into a $CO_2$ absorber, a $CO_2$-absorbing solution is brought into contact with $CO_2$ included in the flue gas so that $CO_2$ is made to be absorbed thereinto. The $CO_2$-absorbing solution that has absorbed $CO_2$ is sent to and heated and decarboxylated in a $CO_2$-absorbing solution regenerator, and thereby, a high-concentration $CO_2$ gas is recovered. The $CO_2$-absorbing solution after the decarboxylation is supplied to the $CO_2$ absorber by a liquid feed pump, and the $CO_2$-absorbing solution is circulated and used between the $CO_2$ absorber and the $CO_2$-absorbing solution regenerator.

Citation List

Patent Literature

[PTL 1] Japanese Patent No. 5237204
[PTL 2] US2012/0167760

Summary of Invention

Technical Problem

Meanwhile, in the $CO_2$ recovery unit described in PTL 1, the control of maintaining $CO_2$ recovery amount at a target value on the basis of the fluctuations of the gas flow rate of the flue gas, the introduction temperature of the flue gas, and the like from reference values is performed. However, even in a case where the control is performed in this way, it may be difficult to maintain the $CO_2$ recovery amount at the target value due to the influence of a predetermined relational expression used for the control and the precision of a measurement instrument.
PTL 2 discloses a $CO_2$ recovery unit comprising a $CO_2$ absorber that brings a gas to be treated and a $CO_2$-absorbing solution into contact with each other to cause $CO_2$ included in the gas to be treated to be absorbed into the $CO_2$-absorbing solution, and supplies the $CO_2$-absorbing solution which has absorbed the $CO_2$ to a $CO_2$-absorbing solution regenerator through a rich solution supply tube; the $CO_2$ regenerator that heats the $CO_2$-absorbing solution which has absorbed $CO_2$, releases $CO_2$ from the $CO_2$-absorbing solution, regenerates the $CO_2$-absorbing solution; and supplies the $CO_2$-absorbing solution which has been regenerated to the $CO_2$ absorber through a lean solution supply tube; a $CO_2$ recovery amount control unit that on the basis of an actual measured value of an amount of $CO_2$ recovered from the gas to be treated and a target value of an $CO_2$ recovery amount, changes the circulation amount of the $CO_2$-absorbing solution to be supplied to the $CO_2$ absorber and changes a supply amount of saturated steam to be supplied to a regeneration heater of the $CO_2$-absorbing solution regenerator to control a difference value between the actual measured value and the target value of the $CO_2$ recovery amount to be within a predetermined range). Thus, in PTL 2 more importance is attached to promptly determine the amount of $CO_2$ actually removed from the flue gas in the absorber than to promptly determine the amount of $CO_2$ which is later on released from the regenerator.
The invention has been made in view of such actual circumstances, and an object thereof is to provide a further $CO_2$ recovery unit and a $CO_2$ recovery method with which a $CO_2$ recovery amount and/or a $CO_2$ recovery rate can be controlled with high accuracy toward target values. Solution to Problem
A $CO_2$ recovery unit of the invention is defined in claim 1.
According to this $CO_2$ recovery unit, the circulation amount of the $CO_2$-absorbing solution and the supply amount of the saturated steam to be supplied to the regeneration heater can be appropriately controlled according to changes in the actual measured values of the $CO_2$ recovery rate and the $CO_2$ recovery amount in the gas to be treated. Thus, even in a case where there is an influence on a predetermined relational expression to be used for control and the precision of a measuring instrument due to changes in operation condition and the measuring instrument, the $CO_2$ recovery unit that can control the $CO_2$ recovery amount and/or the $CO_2$ recovery rate toward a target value with high accuracy can be realized.

In the $CO_2$ recovery unit of the invention, it is preferable that the $CO_2$ recovery rate control unit controls the $CO_2$ recovery rate through proportional calculation and integration calculation on the basis of the difference value between the actual measured value and the target value of the $CO_2$ recovery rate.

In the $CO_2$ recovery unit of the invention, it is preferable that the $CO_2$ recovery amount control unit controls the $CO_2$ recovery amount through proportional calculation and integration calculation on the basis of the difference value between the actual measured value and the target value of the $CO_2$ recovery amount.

In the $CO_2$ recovery unit of the invention, it is preferable that the $CO_2$ recovery rate control unit includes a first control mode where the circulation amount and the supply amount of the saturated steam are calculated and controlled at any time, and a second control mode where the circulation amount and the supply amount of the saturated steam are calculated and controlled for each predetermined period, and the $CO_2$ recovery amount control unit includes a first control mode where the circulation amount and the supply amount of the saturated steam are calculated and controlled at any time, and a second control mode where the circulation amount and the supply amount of the saturated steam are calculated and controlled for each predetermined period.

In the $CO_2$ recovery unit of the invention, it is preferable that any one of the $CO_2$ recovery rate control unit and the $CO_2$ recovery amount control unit is caused to be in the first control mode, and the other is caused to be in the second control mode.

In the $CO_2$ recovery unit of the invention, it is preferable that the $CO_2$ recovery rate control unit is caused to be a first control mode where the circulation amount and the supply amount of the saturated steam are calculated and controlled at any time, the $CO_2$ recovery amount control unit is caused to be a first control mode where the circulation amount and the supply amount of the saturated steam are calculated and controlled at any time, and control is performed by providing any one of the $CO_2$ recovery amount control unit and the $CO_2$ recovery rate control unit with a dead band.

A $CO_2$ recovery method of the invention is defined in claim 8.

According to this $CO_2$ recovery method, the circulation amount of the $CO_2$-absorbing solution and the supply amount of the saturated steam to be supplied to the regeneration heater can be appropriately controlled according to changes in the actual measured values of the $CO_2$ recovery rate and the $CO_2$ recovery amount in the gas to be treated. Thus, even in a case where there is an influence on a predetermined relational expression to be used for control and the precision of a measuring instrument due to changes in operation condition and the measuring instrument, the $CO_2$ recovery method that can control the $CO_2$ recovery amount and/or the $CO_2$ recovery rate toward the target values with high accuracy can be realized.

In the $CO_2$ recovery method of the invention, it is preferable that the $CO_2$ recovery rate is controlled through proportional calculation and integration calculation on the basis of the difference value between the actual measured value and the target value of the $CO_2$ recovery rate.

In the $CO_2$ recovery method of the invention, it is preferable that the $CO_2$ recovery amount is controlled through proportional calculation and integration calculation on the basis of the difference value between the actual measured value and the target value of the $CO_2$ recovery amount.

In the $CO_2$ recovery method of the invention, it is preferable that the $CO_2$ recovery rate and the $CO_2$ recovery amount are controlled by performing switching between a first control mode where the circulation amount and the supply amount of the saturated steam are calculated and controlled at any time, and a second control mode where the circulation amount and the supply amount of the saturated steam are calculated and controlled for each predetermined period.

In the $CO_2$ recovery method of the invention, it is preferable that any one of the $CO_2$ recovery rate and the $CO_2$ recovery amount is controlled in the first control mode, and the other is controlled in the second control mode.

In the $CO_2$ recovery method of the invention, it is preferable that the $CO_2$ recovery rate and the $CO_2$ recovery amount are controlled in the first control mode, and any one of the $CO_2$ recovery amount and the $CO_2$ recovery rate is controlled by providing a dead band.

Advantageous Effects of Invention

According to the invention, the $CO_2$ recovery unit and the $CO_2$ recovery method with which the $CO_2$ recovery amount and/or the $CO_2$ recovery rate can be controlled with high accuracy toward the target values can be realized.

Brief Description of Drawings

Fig. 1 is a schematic view of a $CO_2$ recovery unit related to an embodiment of the invention.
Fig. 2 is a functional block diagram of a control unit related to the embodiment of the invention.
Fig. 3 is a flow chart illustrating a method of controlling a $CO_2$ recovery rate control unit and a $CO_2$ recovery amount

control unit related to the present embodiment.

Fig. 4 is a conceptual diagram of an operation control in which a dead band of the $CO_2$ recovery unit related to the present embodiment is provided.

Description of Embodiments

The present inventors have noted that, in a related-art $CO_2$ recovery unit, even in a case where a $CO_2$ recovery amount and a $CO_2$ recovery rate are controlled to target values obtained on the basis of relationships between $CO_2$ concentration in a gas to be treated, the flow rate of the gas to be treated, and a reference value and a measured value of temperature, the target values and actual measured values may deviate from each other under the influence of measurement accuracy using a relational expression and a measurement instrument that are used for calculation. The present inventors also have found out that the $CO_2$ recovery amount and/or the $CO_2$ recovery rate can be controlled with high accuracy toward the target values by providing control units for the $CO_2$ recovery amount and the $CO_2$ recovery rate, respectively, to control the $CO_2$ recovery amount and the $CO_2$ recovery rate such that the $CO_2$ recovery amount and the $CO_2$ recovery rate that are actually measured using a gas flowmeter and a gas concentration meter reach the target values, and have completed the invention.

Hereinafter, an embodiment of the invention will be described in detail with reference to the accompanying drawings. In addition, the invention is not limited to the following embodiment, and can be appropriately changed and carried out. Additionally, the configurations of $CO_2$ recovery units related to the following respective embodiments can be appropriately combined and carried out.

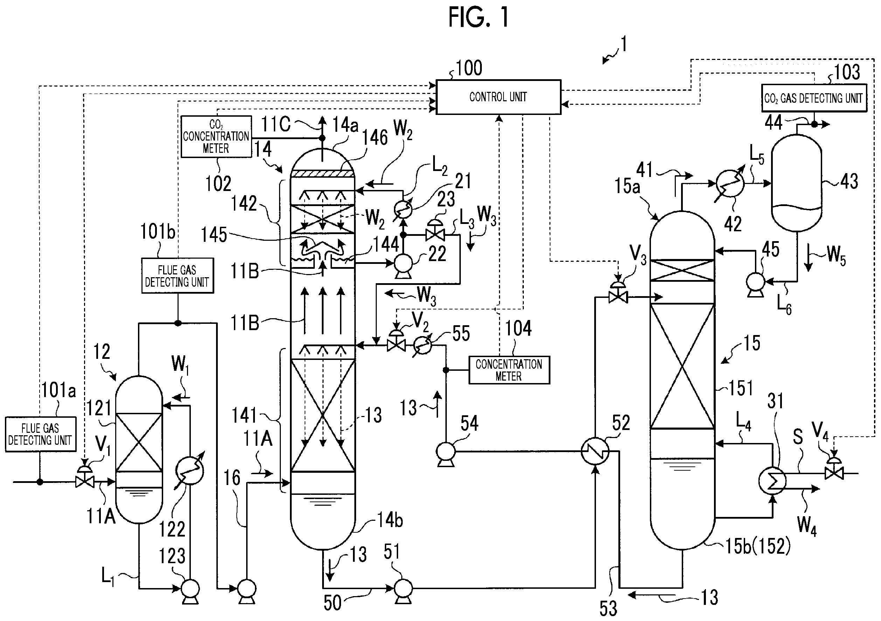

Fig. 1 is a schematic view of a $CO_2$ recovery unit related to an embodiment of the invention. As illustrated in Fig. 1, a $CO_2$ recovery unit 1 is an device that absorbs $CO_2$ in a flue gas (a gas to be treated) 11A containing $CO_2$ exhausted from industrial facilities, such as a boiler and a gas turbine, and recovers a high-concentration $CO_2$ gas. The $CO_2$ recovery unit 1 includes a quencher 12 that cools the flue gas 11A containing $CO_2$ exhausted from industrial facilities, such as a boiler and a gas turbine; a $CO_2$ absorber 14 that is provided in a subsequent stage of the quencher 12, brings the cooled flue gas 11A into contact with a $CO_2$-absorbing solution 13, and makes the $CO_2$-absorbing solution 13 absorb and remove $CO_2$ in the flue gas 11A; and a $CO_2$-absorbing solution regenerator 15 that is provided in the subsequent stage of the $CO_2$ absorber 14, releases $CO_2$ from the $CO_2$-absorbing solution 13 that has absorbed the $CO_2$, and regenerates the $CO_2$-absorbing solution 13.

In the $CO_2$ recovery unit 1, the $CO_2$-absorbing solution 13 circulates between the $CO_2$ absorber 14 and the $CO_2$-absorbing solution regenerator 15. The $CO_2$-absorbing solution 13 (lean solution) absorbs $CO_2$ in the $CO_2$ absorber 14, and is supplied to the $CO_2$-absorbing solution regenerator 15 as the $CO_2$-absorbing solution 13 (rich solution). Additionally, the $CO_2$-absorbing solution 13 (rich solution) has substantially all $CO_2$ removed and regenerated in the $CO_2$-absorbing solution regenerator 15, and is supplied to the $CO_2$ absorber 14 as the $CO_2$-absorbing solution 13 (lean solution).

The quencher 12 has a quenching section 121 that cools the flue gas 11A. A circulation line $L_1$ is provided between a bottom part of the quencher 12 and a top part of the quenching section 121. A heat exchanger 122 that cools cooling water $W_1$, and a circulation pump 123 that circulate the cooling water $W_1$ within the circulation line $L_1$ are provided in the circulation line $L_1$.

In the quenching section 121, the flue gas 11A is cooled by bringing the flue gas 11A into countercurrent contact with the cooling water $W_1$. The heat exchanger 122 cools the cooling water $W_1$ heated by the heat exchange with the flue gas 11A. The circulation pump 123 supplies the cooling water $W_1$, which has flowed down to the bottom part of the quencher 12, to the top part of the quenching section 121 via the heat exchanger 122.

The $CO_2$ absorber 14 includes a $CO_2$ absorption section 141 that is provided on a lower part side of the $CO_2$ absorber 14 and has the flue gas 11A cooled in the quencher 12 supplied thereto, a washing section 142 that is provided on an upper part side of the $CO_2$ absorber 14. A liquid storage section 144 that stores cleaning water $W_2$ for cleaning a flue gas 11B from which $CO_2$ has been removed is provided at a bottom part of the washing section 142. A circulation line $L_2$, through which the cleaning water $W_2$, containing the $CO_2$-absorbing solution 13 recovered in the liquid storage section 144, is supplied and circulated from a top part side of the washing section 142, is provided between the liquid storage section 144 and an upper part of the washing section 142. The circulation line $L_2$ is provided with a heat exchanger 21 that cools the cleaning water $W_2$, and a circulation pump 22 that circulates the cleaning water $W_2$, containing the $CO_2$-absorbing solution 13 recovered in the liquid storage section 144, within the circulation line $L_2$ via the heat exchanger 21. Additionally, the circulation line $L_2$ is provided with an extraction line $L_3$ through which a portion of the cleaning water $W_2$ (cleaning water $W_3$) is extracted and supplied to the $CO_2$ absorption section 141. The extraction line $L_3$ is provided with a control valve 23 that adjusts the amount of supply of cleaning water $W_3$ to be supplied to the $CO_2$-absorbing solution 13 (lean solution).

In the $CO_2$ absorption section 141, the flue gas 11A containing $CO_2$ and the $CO_2$-absorbing solution 13 containing alkanolamine or the like come into countercurrent contact with each other. Accordingly, $CO_2$ in the flue gas 11A is

absorbed by the $CO_2$-absorbing solution 13 through a chemical reaction shown in the following Formula. As a result, the flue gas 11A containing $CO_2$ becomes the flue gas 11B from which $CO_2$ has been removed by passing through the $CO_2$ absorption section 141.

$$R-NH_2 + H_2O + CO_2 \rightarrow R-NH_3HCO_3$$

In the washing section 142, the flue gas 11B from which $CO_2$ has been removed rises via a chimney tray 145. Then, the flue gas 11B is brought into gas-liquid contact with the cleaning water $W_2$ supplied from the top part side of the washing section 142, and becomes a flue gas 11C from which the $CO_2$-absorbing solution 13 entrained in the flue gas 11B has been recovered by circulation cleaning. The flue gas 11C is exhausted to the outside from a tower top part 14a of the $CO_2$ absorber 14 after mist in the gas is trapped by a mist eliminator 146.

A rich solution supply tube 50 through which the $CO_2$-absorbing solution 13 (rich solution), which has absorbed $CO_2$ in the $CO_2$ absorber 14, is supplied to an upper part side of the $CO_2$-absorbing solution regenerator 15, is provided between a tower bottom part 14b of the $CO_2$ absorber 14 and an upper part of the $CO_2$-absorbing solution regenerator 15. The rich solution supply tube 50 is provided with a rich solvent pump 51 that supplies the $CO_2$-absorbing solution 13 (rich solution), which has absorbed $CO_2$ in the $CO_2$ absorber 14, toward the $CO_2$-absorbing solution regenerator 15, and a rich-lean solution heat exchanger 52 that heats the $CO_2$-absorbing solution 13 (rich solution) that has absorbed $CO_2$, using the $CO_2$-absorbing solution 13 (lean solution) which has been heated with saturated steam S and from which $CO_2$ has been removed.

The $CO_2$-absorbing solution regenerator 15 includes a $CO_2$-absorbing solution supply part 151 that is provided at a central part of the $CO_2$-absorbing solution regenerator 15 and has the $CO_2$-absorbing solution 13, which has absorbed $CO_2$, supplied thereto, and a mirror surface part 152 of a tower bottom part 15b of a lower part of the $CO_2$-absorbing solution supply part 151.

The tower bottom part 15b of the $CO_2$-absorbing solution regenerator 15 is provided with a circulation line $L_4$ through which the $CO_2$-absorbing solution 13 that has flowed down to the tower bottom part 15b circulates. The circulation line $L_4$ is provided with a regeneration heater 31 that heats the $CO_2$-absorbing solution 13 with saturated steam S.

A tower top part 15a of the $CO_2$-absorbing solution regenerator 15 is provided with a gas exhaust line $L_5$ through which a $CO_2$ gas 41 accompanied by the saturated steam S is exhausted. The gas exhaust line $L_5$ is provided with a condenser 42 that condenses moisture in the $CO_2$ gas 41, and a separation drum 43 that separates the $CO_2$ gas 41 from condensed water $W_5$. A $CO_2$ gas 44 from which the condensed water $W_5$ has been separated is released to the outside from an upper part of the separation drum 43. A condensed water line $L_6$ through which the condensed water $W_5$ separated by the separation drum 43 is supplied to the upper part of the $CO_2$-absorbing solution regenerator 15 is provided between a bottom part of the separation drum 43 and the upper part of the $CO_2$-absorbing solution regenerator 15. The condensed water line $L_6$ is provided with a condensed water circulation pump 45 that supplies the condensed water $W_5$ separated by the separation drum 43 to the upper part of the $CO_2$-absorbing solution regenerator 15.

Additionally, the tower bottom part 15b of the $CO_2$-absorbing solution regenerator 15 and an upper part of the $CO_2$ absorption section 141 of the $CO_2$ absorber 14 are provided with a lean solution supply tube 53 through which the $CO_2$-absorbing solution 13 (lean solution) in the tower bottom part 15b of the $CO_2$-absorbing solution regenerator 15 is supplied to the upper part of the $CO_2$ absorption section 141. The lean solution supply tube 53 is provided with the rich-lean solution heat exchanger 52 that heats the $CO_2$-absorbing solution 13 (rich solution), which has absorbed $CO_2$, using the $CO_2$-absorbing solution 13 (lean solution) which has been heated with saturated steam and from which $CO_2$ has been removed, a lean solution pump 54 that supplies the lean solution in the tower bottom part 15b of the $CO_2$-absorbing solution regenerator 15 to the upper part of the $CO_2$ absorption section 141, and a quenching section 55 that cools the $CO_2$-absorbing solution 13 (lean solution) to a predetermined temperature.

The $CO_2$ recovery unit 1 related to the present embodiment includes a flue gas detecting unit 101a that is provided in a flow passage for the flue gas 11A to be introduced into the quencher 12, a flue gas detecting unit 101b that is provided in a flow passage for the flue gas 11A exhausted from the quencher 12, a $CO_2$ concentration meter 102 that is provided in a flow passage for the flue gas 11C exhausted from $CO_2$ absorber 14, a $CO_2$ gas detecting unit 103 that is provided in a flow passage for the $CO_2$ gas 44 exhausted from the separation drum 43, and a concentration meter 104 that measures the concentration of the $CO_2$-absorbing solution (lean solution) 13 to be supplied to the $CO_2$ absorber 14.

A flue gas detecting unit 101a measures $CO_2$ concentration in the flue gas 11A to be introduced into the quencher 12, and transmits the measured $CO_2$ concentration to a control unit 100. The flue gas detecting unit 101b measures the gas flow rate and the gas temperature of the flue gas 11A exhausted from the quencher 12, and transmits the measured $CO_2$ concentration, gas flow rate, and gas temperature to the control unit 100. The $CO_2$ concentration meter 102 detects $CO_2$ concentration in the flue gas 11C exhausted from the $CO_2$ absorber 14, and transmits the detected $CO_2$ concentration to the control unit 100.

The $CO_2$ gas detecting unit 103 detects the gas flow rate and the concentration of the $CO_2$ gas 44 exhausted

from the separation drum 43, and transmits the gas flow rate and the concentration to the control unit 100. The concentration meter 104 measures the concentration of the $CO_2$-absorbing solution (lean solution) 13 to be supplied to the $CO_2$ absorber 14, and transmits the measured concentration of the $CO_2$-absorbing solution (lean solution) 13 to the control unit 100.

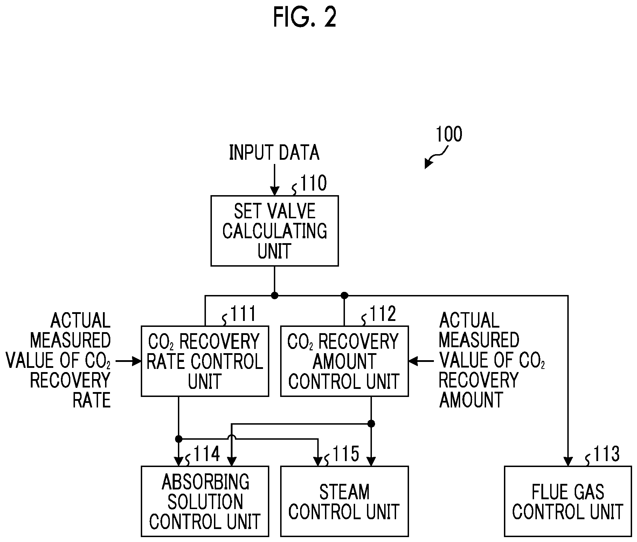

Fig. 2 is a functional block diagram of the control unit 100 related to the present embodiment. The control unit 100 related to the present embodiment includes a set value calculating unit 110 that calculates set values as various reference values required for the operation of the $CO_2$ recovery unit 1 on the basis of input data, a $CO_2$ recovery rate control unit 111 and a $CO_2$ recovery amount control unit 112 that correct the set values on the basis of an actual measured value of the $CO_2$ recovery rate of the $CO_2$ recovery unit 1, and calculate corrected data, a flue gas control unit 113 that controls the flow rate of the flue gas 11A to be introduced into the quencher 12 via a control valve $V_1$, an absorbing solution control unit 114 that controls the liquid amount of the $CO_2$-absorbing solution (lean solution) 13 to be supplied to $CO_2$ absorber 14 via a control valve $V_2$ and controls the liquid amount of the $CO_2$-absorbing solution (rich solution) 13 to be supplied to the $CO_2$-absorbing solution regenerator 15 via a control valve $V_3$, and a steam control unit 115 that controls the flow rate of the saturated steam S to be supplied to the regeneration heater 31 via a control valve $V_4$.

The set value calculating unit 110 calculates, according to a predetermined relational expression, a set value of the gas flow rate of the flue gas 11A based on a reference value that is set in advance on the basis of a $CO_2$ recovery rate target value and a $CO_2$ recovery amount target value, the $CO_2$ concentration and gas temperature in the flue gas 11A, and the concentration of the $CO_2$-absorbing solution (lean solution) 13, a set value of the flow rate of the $CO_2$-absorbing solution (lean solution) 13 to be supplied to $CO_2$ absorber 14, a set value of the flow rate of the $CO_2$-absorbing solution (rich solution) 13 to be supplied to $CO_2$-absorbing solution regenerator 15, and a set value of the flow rate of the saturated steam S to be supplied to the regeneration heater 31, and transmits the calculated results to the $CO_2$ recovery rate control unit 111, the $CO_2$ recovery amount control unit 112, and the flue gas control unit 113.

The $CO_2$ recovery rate control unit 111 compares the $CO_2$ concentration in the flue gas 11A detected by the flue gas detecting unit 101 and the actual measured value of the $CO_2$ recovery rate measured by the $CO_2$ concentration meter 102 with the set values thereof, and calculates correction values (target values) obtained by calculating the flow rate of the saturated steam S and the flow rate of the $CO_2$-absorbing solution 13 required in order to bring the $CO_2$ recovery rate close to the set values and by correcting the set values. Here, the $CO_2$ recovery rate control unit 111 corrects a set value through proportional calculation and integration calculation for the deviation of a difference between the actual measured value and the target value of the $CO_2$ recovery rate. The $CO_2$ recovery rate control unit 111 transmits the corrected data to the absorbing solution control unit 114 and the steam control unit 115 as corrected data.

The $CO_2$ recovery amount control unit 112 compares an actual measured value of the $CO_2$ recovery amount measured by the $CO_2$ gas detecting unit 103 with the target value of the $CO_2$ recovery amount, and calculates a correction value (target value) obtained by calculating the flow rate of the saturated steam S and the flow rate of the $CO_2$-absorbing solution 13 required in order to make the $CO_2$ recovery amount reach the target value and by correcting a set value. Here, the $CO_2$ recovery amount control unit 112 corrects the set value through proportional calculation and integration calculation for the deviation of a difference between the actual measured value and the target value of the $CO_2$ recovery amount. The $CO_2$ recovery amount control unit 112 transmits the corrected data to the absorbing solution control unit 114 and the steam control unit 115 as corrected data.

The flue gas control unit 113 controls the flow rate of the flue gas 11A to be introduced into the quencher 12 via the control valve $V_1$ on the basis of the calculation results of the set value calculating unit 110.

The absorbing solution control unit 114 controls the liquid amount of the $CO_2$-absorbing solution (lean solution) 13 to be supplied to the $CO_2$ absorber 14 via the control valve $V_2$ on the basis of the calculation results of the $CO_2$ recovery rate control unit 111 and the $CO_2$ recovery amount control unit 112, and controls the liquid amount of the $CO_2$-absorbing solution (rich solution) 13 to be supplied to the $CO_2$-absorbing solution regenerator 15 via the control valve $V_3$.

The steam control unit 115 controls the flow rate of the saturated steam S to be supplied to the regeneration heater 31 via the control valve $V_4$ on the basis of the calculation results of the $CO_2$ recovery rate control unit 111 and the $CO_2$ recovery amount control unit 112.

Next, the overall operation of the $CO_2$ recovery unit 1 related to the present embodiment will be described. The flue gas 11A containing $CO_2$ exhausted from industrial facilities, such as a boiler and a gas turbine, is introduced into the quencher 12, and is brought into countercurrent contact with and cooled by the cooling water $W_1$ after the $CO_2$ concentration, gas flow rate, and temperature in the flue gas 11A are measured by the flue gas detecting unit 101. The cooled flue gas 11A is introduced into the $CO_2$ absorber 14 via a flue 16. The flue gas 11A introduced into the $CO_2$ absorber 14 is brought into countercurrent contact with the $CO_2$-absorbing solution 13 containing alkanolamine or the like in the $CO_2$ absorption section 141, and becomes the flue gas 11B from which $CO_2$ in the flue gas 11A has been absorbed by the $CO_2$-absorbing solution 13 and $CO_2$ has been removed.

The flue gas 11B from which $CO_2$ has been removed rises via the chimney tray 145, is brought into gas-liquid contact with the cleaning water $W_2$ supplied from the top part side of the washing section 142, and becomes the flue gas 11C from which the $CO_2$-absorbing solution 13 entrained in the flue gas 11B has been recovered by circulation cleaning. The $CO_2$ concentration in the flue gas 11C is measured by the $CO_2$ concentration meter 102 and the flue gas 11C is exhausted from the tower top part 14a of the $CO_2$ absorber 14 to the outside, after the mist in the gas is caught by the mist eliminator 146.

The $CO_2$-absorbing solution 13 (rich solution) that has absorbed $CO_2$ is sent to the rich-lean solution heat exchanger 52 by a rich solvent pump 51 via a rich solution supply tube 50 in the $CO_2$ absorber 14. In the rich-lean solution heat exchanger 52, the $CO_2$-absorbing solution 13 (rich solution) sent from the $CO_2$ absorber 14 is heat-exchanged with the $CO_2$-absorbing solution 13 (lean solution) sent from the $CO_2$-absorbing solution regenerator 15. The $CO_2$-absorbing solution 13 (rich solution) after this heat exchange is supplied to the upper part of the $CO_2$-absorbing solution regenerator 15. The $CO_2$-absorbing solution 13 supplied to the $CO_2$-absorbing solution regenerator 15 has $CO_2$ removed therefrom and becomes a semi-lean solution, while flowing down to the tower bottom part 15b via the $CO_2$-absorbing solution supply part 151. This semi-lean solution is circulated through the circulation line $L_4$, is heated by the saturated steam S in the regeneration heater 31, and becomes the $CO_2$-absorbing solution 13 (lean solution). The saturated steam S after being heated becomes the saturated steam condensed water $W_4$. The $CO_2$ gas 41 removed from the $CO_2$-absorbing solution 13 is released to the outside as the $CO_2$ gas 44 from which the condensed water $W_5$ has been separated through the upper part of the separation drum 43 after the moisture thereof is condensed by the condenser 42. In the $CO_2$ gas detecting unit 103, the $CO_2$ concentration in the $CO_2$ gas 44 is measured.

The $CO_2$-absorbing solution 13 (lean solution) of the tower bottom part 15b of the $CO_2$-absorbing solution regenerator 15 is supplied to the upper part of the $CO_2$ absorption section 141 of the $CO_2$ absorber 14 by the lean solution pump 54 after being heat-exchanged with the $CO_2$-absorbing solution 13 (rich solution) by the rich-lean solution heat exchanger 52 via the lean solution supply tube 53.

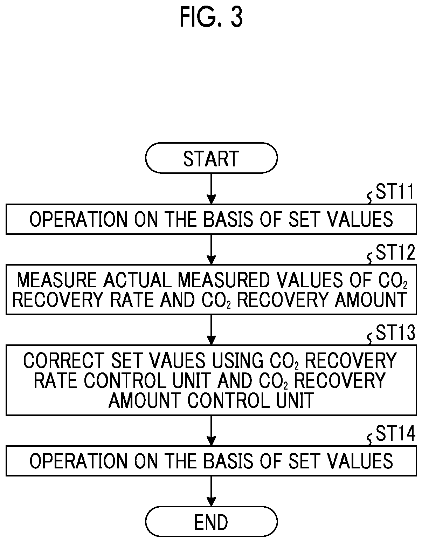

Fig. 3 is a flow chart illustrating a method of controlling the $CO_2$ recovery rate control unit 111 and the $CO_2$ recovery amount control unit 112 related to the present embodiment. As illustrated in Fig. 3, the $CO_2$ recovery rate control unit 111 controls the operation of the $CO_2$ recovery rate on the basis of the set value of the flow rate of the $CO_2$-absorbing solution 13 based on a reference value that is set in advance on the basis of the $CO_2$ concentration in the flue gas 11A, the flow rate and temperature of the flue gas 11A, and a set value of the flow rate of the saturated steam S to be supplied to the regeneration heater 31, in early stages of the operation of the $CO_2$ recovery unit 1 (Step ST11). Additionally, after elapse of a predetermined period, the $CO_2$ recovery rate control unit 111 measures an actual measured value of the $CO_2$ recovery rate using the flue gas detecting unit 101a and the $CO_2$ concentration meter 102, compares the actual measured value of the $CO_2$ recovery rate with the target value thereof (Step ST12), calculates the flow rate of the saturated steam S and the flow rate of the $CO_2$-absorbing solution 13 in order to make the $CO_2$ recovery rate reach the target value, and corrects the set value (Step ST13). The $CO_2$ recovery rate control unit 111 controls the $CO_2$ recovery rate on the basis of the set value obtained by correcting the flow rate of the $CO_2$-absorbing solution 13 and the flow rate of the saturated steam S to be supplied to the regeneration heater 31 (Step ST14).

Here, the $CO_2$ recovery rate control unit 111 corrects the set value such that the flow rate of the saturated steam S and the flow rate of the $CO_2$-absorbing solution 13 (lean solution) are increased with respect to the set value, for example, in a case where the actual measured value (for example, 85%) of the $CO_2$ recovery rate is lower than the target value (for example, 90%). Accordingly, since the absorbing solution control unit 114 increases the flow rate of the $CO_2$-absorbing solution 13 (lean solution) and the steam control unit 115 increases the flow rate of the saturated steam S, it is possible to increase the actual measured value of the $CO_2$ recovery rate of $CO_2$ recovery unit 1 toward the target value thereof.

The $CO_2$ recovery amount control unit 112 controls the $CO_2$ recovery amount on the basis of the set value of the flow rate of the $CO_2$-absorbing solution 13 based on the reference value that is set in advance on the basis of the $CO_2$ concentration in the flue gas 11A, the flow rate and temperature of the flue gas 11A, and a set value of the flow rate of the saturated steam S to be supplied to the regeneration heater 31, in early stages of the operation of the $CO_2$ recovery unit 1 (Step ST11). Additionally, after elapse of a predetermined period, the $CO_2$ recovery amount control unit 112 measures the actual measured value of the $CO_2$ recovery amount using the $CO_2$ gas detecting unit 103, compares the measured actual measured value with the target value (Step ST12), calculates the flow rate of the saturated steam S and the flow rate of the $CO_2$-absorbing solution 13 in order to make the $CO_2$ recovery amount reach the target value, and corrects the set value (Step ST13) . Then, the $CO_2$ recovery amount control unit 112 controls the $CO_2$ recovery amount on the basis of the set value obtained by correcting the flow rate of the $CO_2$-absorbing solution 13 and the flow rate of the saturated steam S to be supplied to the regeneration heater 31 (Step ST14).

Here, the $CO_2$ recovery amount control unit 112 corrects the set value such that the flow rate of the saturated steam S and the flow rate of the $CO_2$-absorbing solution 13 (rich solution) are increased with respect to the set value, for example, in a case where the actual measured value (for example, 85 t/h) of the $CO_2$ recovery amount is lower than the target value (for example, 90 t/h). Accordingly, since the absorbing solution control unit 114 increases the flow rate of the $CO_2$-absorbing solution 13 (rich solution) and the steam control unit 115 increases the flow rate of the saturated steam S, it is possible to increase the actual measured value of the $CO_2$ recovery amount of $CO_2$ recovery unit 1 toward the target value thereof.

As described above, according to the present embodiment, the circulation amount of the $CO_2$-absorbing solution 13 and the amount of the saturated steam S supplied to the regeneration heater 31 can be appropriately controlled according to changes in the actual measured values of the $CO_2$ recovery rate and the $CO_2$ recovery amount in the flue gas 11A. Accordingly, even in a case where there is an influence on the predetermined relational expression to be used for the operation control of the $CO_2$ recovery unit and the precision of a measuring instrument due to changes in operation condition and the measuring instrument, the $CO_2$ recovery unit 1 that can control the $CO_2$ recovery amount and/or the $CO_2$ recovery rate to the target values with high accuracy can be realized.

In addition, an example in which both of the $CO_2$ recovery rate control unit 111 and the $CO_2$ recovery amount control unit 112 are provided, and thus both of the $CO_2$ recovery rate and the $CO_2$ recovery amount are controlled has been described in the above-described embodiment. However, the invention is not limited to this configuration. The $CO_2$ recovery unit 1 may have a configuration including any one of the $CO_2$ recovery rate control unit 111 and the $CO_2$ recovery amount control unit 112. Even in this case, the circulation amount of the $CO_2$-absorbing solution 13 and the amount of the saturated steam S supplied to the regeneration heater 31 can be appropriately controlled according to changes in the actual measured values of the $CO_2$ recovery rate and the $CO_2$ recovery amount. Thus, it is possible to accurately control the $CO_2$ recovery rate and the $CO_2$ recovery amount.

Additionally, an example in which the absorbing solution control unit 114 and the steam control unit 115 are controlled on the basis of the corrected data that the $CO_2$ recovery rate control unit 111 and the $CO_2$ recovery amount control unit 112 have corrected has been described in the above-described embodiment. However, the invention is not limited to this configuration. The $CO_2$ recovery unit 1 may control the flue gas control unit 113, the absorbing solution control unit 114, and the steam control unit 115, on the basis of the data obtained by further adding the $CO_2$ concentration in the flue gas 11A and the gas flow rate, temperature, and the like of the flue gas 11A to the corrected data that the $CO_2$ recovery rate control unit 111 and the $CO_2$ recovery amount control unit 112 have corrected.

Moreover, an example in which the operation of the $CO_2$ recovery unit 1 is controlled using the corrected data of both of the $CO_2$ recovery rate control unit 111 and the $CO_2$ recovery amount control unit 112 has been described in the above-described embodiment. However, the invention is not limited to this configuration. The $CO_2$ recovery unit 1 may operate any one of the $CO_2$ recovery rate control unit 111 and the $CO_2$ recovery amount control unit 112 in a first control mode where the corrected data is calculated and controlled at any time, and may operate the other in a second control mode where calculation processing is not performed at any time and the calculation processing is performed for each predetermined period. By controlling the operation in this way, the interference between the corrected data can be reduced even in a case where a measurement error or the like has occurred between the calculation processing using the $CO_2$ recovery rate control unit 111, and the calculation processing using the $CO_2$ recovery amount control unit 112. Thus, it is possible to control the $CO_2$ recovery rate and/or the $CO_2$ recovery amount to the target values with high accuracy.

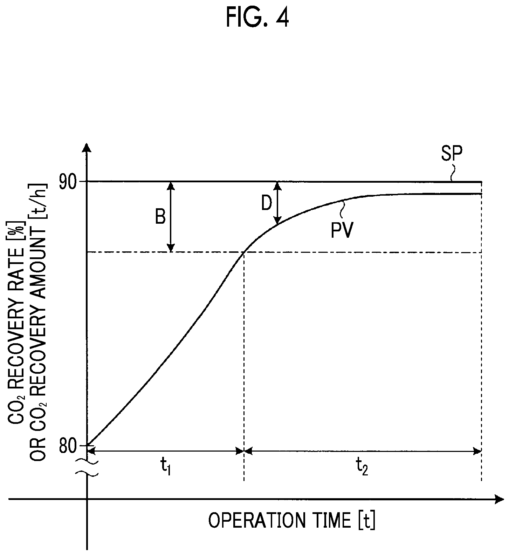

Moreover, in then above-described embodiment, an operation control may be performed by providing a dead band, without performing the integration calculation regarding any one of the $CO_2$ recovery rate control unit 111 and the $CO_2$ recovery amount control unit 112. Fig. 4 is a conceptual diagram of an operation control in which a dead band is provided. In addition, in Fig. 4, a horizontal axis represents operation time, and a vertical axis represents $CO_2$ recovery rate (%) or $CO_2$ recovery amount (t/h).

As illustrated in Fig. 4, in the present embodiment, for example if an operation control is performed such that difference values D between target values (SP) and actual measured values (PV) of the $CO_2$ recovery rate and the $CO_2$ recovery amount fall within a predetermined range by integration calculation based on the following Expression (1), the difference values D gradually decrease with elapse of the operation time t. Thus, when the difference values D between the target values (SP) and the actual measured values (PV) of the $CO_2$ recovery rate (%) or $CO_2$ recovery amount (t/h) have reached a range of operation time t2 smaller than a predetermined range B from the range of the operation time t1, the operation control is performed by proportional calculation by providing a dead band without performing the integration calculation regarding any one of the $CO_2$ recovery rate control unit 111 and the $CO_2$ recovery amount control unit 112. As a result, even in a case where an interference of the corrected data between the $CO_2$ recovery rate control unit 111 and the $CO_2$ recovery amount control unit 112 occurs, regarding any one of the $CO_2$ recovery rate control unit 111 and the $CO_2$ recovery amount control unit 112, a predetermined offset smaller than an offset (for example, about 2% of a set value of the $CO_2$ recovery unit 1) caused by the interference of the corrected data between the target values (SP) and the actual measured values (PV) of the $CO_2$ recovery rate (%) or the $CO_2$ recovery amount (t/h) can be secured. Accordingly, since it is possible to prevent any interference of the corrected data, the offset caused by the interference of the corrected data at the time of the operation of $CO_2$ recovery unit 1 can be reduced to a range of 0.5% to 1%.

[Expression 1]

$$Out = k \cdot e + \int \frac{e}{Ti}$$
$$e = SP - PV \qquad \cdots (1)$$

Additionally, an example in which the flue gas 11A containing $CO_2$ exhausted from industrial facilities, such as a boiler and a gas turbine, is treated by the $CO_2$-absorbing solution 13 has been described in the above-described embodiment. However, as gases to be treated that are treated by the $CO_2$-absorbing solution 13, various gases can be applied if they are gases containing $CO_2$.

Reference Signs List

| | |
|---|---|
| 1: | $CO_2$ RECOVERY UNIT |
| 11A, 11B, 11C: | FLUE GAS |
| 12: | QUENCHER |
| 121: | QUENCHING SECTION |
| 122: | HEAT EXCHANGER |
| 123: | CIRCULATION PUMP |
| 13: | $CO_2$-ABSORBING SOLUTION |
| 13S: | STEAM |
| 14: | $CO_2$ absorber |
| 14a: | TOWER TOP PART |
| 14b: | TOWER BOTTOM PART |
| 141: | $CO_2$ ABSORPTION SECTION |
| 142: | WASHING SECTION |
| 144: | LIQUID STORAGE SECTION |
| 145: | CHIMNEY TRAY |
| 146: | MIST ELIMINATOR |
| 15: | $CO_2$-ABSORBING SOLUTION REGENERATOR |
| 15a: | TOWER TOP PART |
| 15b: | TOWER BOTTOM PART |
| 151: | $CO_2$-ABSORBING SOLUTION SUPPLY PART |
| 152: | MIRROR SURFACE PART |
| 16: | FLUE |
| 21: | HEAT EXCHANGER |
| 22: | CIRCULATION PUMP |
| 23: | CONTROL VALVE |
| 31: | REGENERATION HEATER |
| 41, 44: | $CO_2$ GAS |
| 42: | CONDENSER |
| 43: | SEPARATION DRUM |
| 45: | CONDENSED WATER CIRCULATION PUMP |
| 50: | RICH SOLUTION SUPPLY TUBE |
| 51: | RICH SOLVENT PUMP |
| 52: | RICH-LEAN SOLUTION HEAT EXCHANGER |
| 53: | LEAN SOLUTION SUPPLY TUBE |
| 54: | LEAN SOLUTION PUMP |
| 55: | QUENCHING SECTION |
| 101a: | FLUE GAS DETECTING UNIT |
| 101b: | FLUE GAS DETECTING UNIT |
| 102: | $CO_2$ CONCENTRATION METER |
| 103: | $CO_2$ GAS DETECTING UNIT |
| 104: | CONCENTRATION METER |
| 111: | $CO_2$ RECOVERY RATE CONTROL UNIT |
| 112: | $CO_2$ RECOVERY AMOUNT CONTROL UNIT |
| 113: | FLUE GAS CONTROL UNIT |

| 114: | ABSORBING SOLUTION CONTROL UNIT |
| 115: | STEAM CONTROL UNIT |
| $L_1, L_2, L_4$: | CIRCULATION LINE |
| $L_3$: | EXTRACTION LINE |
| $L_5$: | GAS EXHAUST LINE |
| $L_6$: | CONDENSED WATER LINE |
| S: | SATURATED STEAM |
| $W_1$: | COOLING WATER |
| $W_2, W_3$: | CLEANING WATER |
| $W_4$: | SATURATED STEAM CONDENSED WATER |
| $W_5$: | CONDENSED WATER |

**Claims**

1. A $CO_2$ recovery unit (1) comprising:

   a $CO_2$ absorber (14) that brings a gas to be treated (11A) and a $CO_2$-absorbing solution (13) into contact with each other to cause $CO_2$ included in the gas to be treated (11A) to be absorbed into the $CO_2$-absorbing solution (13), and supplies the $CO_2$-absorbing solution (13) which has absorbed the $CO_2$ to a $CO_2$-absorbing solution regenerator (15) through a rich solution supply tube (50);
   the $CO_2$-absorbing solution regenerator (15) that heats the $CO_2$-absorbing solution which has absorbed $CO_2$, releases $CO_2$ from the $CO_2$-absorbing solution, regenerates the $CO_2$-absorbing solution, and supplies the $CO_2$-absorbing solution which has been regenerated to the $CO_2$ absorber through a lean solution supply tube (53);
   a first sensor (102) that detects a $CO_2$ concentration in a flue gas (11C) exhausted from the $CO_2$ absorber (14);
   a second sensor (103) that detects a gas flow rate and a concentration of a $CO_2$ gas (44) exhausted from the $CO_2$-absorbing solution regenerator (15);
   and at least one of:

   a $CO_2$ recovery rate control unit (111) that, on the basis of an actual measured value and a target value of a recovery rate of $CO_2$ from the gas to be treated, changes a circulation amount of the $CO_2$-absorbing solution to be supplied to the $CO_2$ absorber (14) and changes a supply amount of saturated steam (S) to be supplied to a regeneration heater (31) of the $CO_2$-absorbing solution regenerator (15) to control a difference value between the actual measured value and the target value of the $CO_2$ recovery rate to be within a predetermined range; and
   a $CO_2$ recovery amount control unit (112) that, on the basis of an actual measured value of CO2 recovery amount detected by the second sensor (103) in the gas released to the outside from the CO2-absorbing solution regenerator and a target value of the $CO_2$ recovery amount, changes the circulation amount of the $CO_2$-absorbing solution to be supplied to the $CO_2$ absorber and changes the supply amount of the saturated steam to be supplied to the regeneration heater of the $CO_2$-absorbing solution regenerator to control a difference value between the actual measured value and the target value of the $CO_2$ recovery amount to be within a predetermined range.

2. The $CO_2$ recovery unit according to claim 1, wherein the $CO_2$ recovery unit (1) has the both of the $CO_2$ recovery rate control unit (111) and the $CO_2$ recovery amount control unit (112).

3. The $CO_2$ recovery unit according to Claim 2, wherein the $CO_2$ recovery amount control unit (112) controls the $CO_2$ recovery amount through proportional calculation and integration calculation on the basis of the difference value between the actual measured value and the target value of the $CO_2$ recovery amount.

4. The $CO_2$ recovery unit according to any one of claims 2 to 3, wherein the $CO_2$ recovery rate control unit (111) controls the $CO_2$ recovery rate through proportional calculation and integration calculation on the basis of the difference value between the actual measured value and the target value of the $CO_2$ recovery rate.

5. The $CO_2$ recovery unit according to any one of claims 2 to 4, wherein the $CO_2$ recovery rate control unit (111) includes a first control mode where the circulation amount and the supply amount of the saturated steam are calculated and controlled at any time, and a second control mode where the calculation is not performed at any time and the circulation amount and the supply amount of the saturated steam are calculated and controlled for each predetermined period, and

wherein the $CO_2$ recovery amount control unit includes a first control mode where the circulation amount and the supply amount of the saturated steam are calculated and controlled at any time, and a second control mode where the calculation is not performed at any time the circulation amount and the supply amount of the saturated steam are calculated and controlled for each predetermined period.

6. The $CO_2$ recovery unit according to claim 5, wherein any one of the $CO_2$ recovery rate control unit (111) and the $CO_2$ recovery amount control unit (112) is caused to be in the first control mode, and the other is caused to be in the second control mode.

7. The $CO_2$ recovery unit according to claim 5, wherein the $CO_2$ recovery rate control unit (111) is caused to be a first control mode,

wherein the $CO_2$ recovery amount control unit (112) is caused to be a first control mode, and

wherein control is performed by providing any one of the $CO_2$ recovery amount control unit and the $CO_2$ recovery rate control unit with a dead band.

8. A $CO_2$ recovery method comprising:

a process of, in a $CO_2$ absorber (14), bringing a gas to be treated (11A) and a $CO_2$-absorbing solution (13) into contact with each other to cause $CO_2$ included in the gas to be treated to be absorbed into the $CO_2$-absorbing solution and supplying the $CO_2$-absorbing solution which has absorbed the $CO_2$ to a $CO_2$-absorbing solution regenerator (15) through a rich solution supply tube (50); and

a process of, in a $CO_2$-absorbing solution regenerator (15), heating the $CO_2$-absorbing solution which has absorbed $CO_2$, releasing $CO_2$ from the $CO_2$-absorbing solution, and regenerating the $CO_2$-absorbing solution , and supplying the $CO_2$-absorbing solution which has been regenerated to the $CO_2$ absorber (14) through a lean solution supply tube (53);

a process of detecting, by a first sensor (102), a $CO_2$ concentration in a flue gas exhausted from the $CO_2$ absorber (14);

a process of detecting, by a second sensor (103), a gas flow rate and a concentration of a $CO_2$ gas (44) exhausted from the $CO_2$-absorbing solution regenerator (15);

wherein, at least one of:

controlling a difference between an actual measured value and a target value of a recovery rate of the $CO_2$ from the gas to be treated to be within a predetermined range by changing, based on the actual measured value and the target value of the recovery rate of $CO_2$, a circulation amount of the $CO_2$-absorbing solution to be supplied to the $CO_2$ absorber (14) and a supply amount of saturated steam to (S) be supplied to a regeneration heater (31) of the $CO_2$-absorbing solution, and

controlling a difference between an actual measured value detected by the second sensor (103) and a target value of a recovery amount of $CO_2$ so that the difference is within a predetermined range by changing, based on the actual measured value and the target value of the recovery amount of $CO_2$ released to the outside from the $CO_2$-absorbing solution regenerator, the circulation amount of the $CO_2$-absorbing solution to be supplied to the $CO_2$ absorber and the supply amount of the saturated steam (S) to be supplied to the regeneration heater of the $CO_2$-absorbing solution regenerator.

9. The $CO_2$ recovery method according to claim 8, wherein the $CO_2$ recovery method has the both of the controlling a difference between an actual measured value and a target value of a recovery rate of the $CO_2$ and the controlling a difference between an actual measured value and a target value of a recovery amount of $CO_2$.

10. The $CO_2$ recovery method according to claim 9, wherein the $CO_2$ recovery rate is controlled through proportional calculation and integration calculation on the basis of the difference value between the actual measured value and the target value of the $CO_2$ recovery rate.

11. The $CO_2$ recovery method according to anyone of claims 9 and 10, wherein the $CO_2$ recovery amount is controlled through proportional calculation and integration calculation on the basis of the difference value between the actual measured value and the target value of the $CO_2$ recovery amount.

12. The $CO_2$ recovery method according to any one of claims 9 to 11, wherein the $CO_2$ recovery rate and the $CO_2$ recovery amount are controlled by switching between a first control mode where the circulation amount and the supply amount of the saturated steam are calculated and controlled at any time, and a second control mode where the calculation is not performed at any time and the circulation amount and the supply amount of the saturated steam are calculated and controlled for each predetermined period.

13. The $CO_2$ recovery method according to claim 12, wherein any one of the $CO_2$ recovery rate and the $CO_2$ recovery amount is controlled in the first control mode, and the other is controlled in the second control mode.

14. The $CO_2$ recovery method according to claim 12, wherein the $CO_2$ recovery rate and the $CO_2$ recovery amount are controlled in the first control mode, and any one of the $CO_2$ recovery amount and the $CO_2$ recovery rate is controlled by providing a dead band.

**Patentansprüche**

1. $CO_2$-Rückgewinnungseinheit (1) umfassend:

einen $CO_2$-Absorber (14), in dem ein zu behandelndes Gas (11A) und eine $CO_2$-absorbierende Lösung (13) miteinander in Kontakt gebracht werden, um zu bewirken, dass das in dem zu behandelnden Gas (11A) enthaltene $CO_2$ von der $CO_2$-absorbierenden Lösung (13) absorbiert wird, und der die $CO_2$-absorbierende Lösung (13), die das $CO_2$ absorbiert hat, durch eine die angereicherte Lösung führende Leitung (50) einem Regenerator (15) der $CO_2$-absorbierenden Lösung zuleitet;
den Regenerator (15) der $CO_2$-absorbierenden Lösung, der die $CO_2$-absorbierende Lösung, die das $CO_2$ absorbiert hat, erhitzt, das $CO_2$ aus der $CO_2$-absorbierenden Lösung herauslöst, die $CO_2$-absorbierende Lösung regeneriert und die $CO_2$-absorbierende Lösung, die regeneriert wurde, durch eine Zufuhrleitung (53) für arme Lösung zu dem $CO_2$-Absorber leitet;
einen ersten Sensor (102), der eine $CO_2$-Konzentration in einem Rauchgas (11C), das aus dem $CO_2$-Absorber (14) ausströmt, ermittelt;
einen zweiten Sensor (103), der einen Gasdurchfluss und eine Konzentration eines $CO_2$-Gases (44), das aus dem Regenerator (15) der $CO_2$-absorbierenden Lösung ausströmt, ermittelt;
und zumindest eine Einheit aus den folgenden:

eine $CO_2$-Rückgewinnungsratensteuereinheit (111), die basierend auf einem tatsächlich gemessenen Ist-Wert und einem Soll-Wert einer Rückgewinnungsrate des $CO_2$ aus dem zu behandelnden Gas, eine Zirkulationsmenge der $CO_2$-absorbierenden Lösung, die dem $CO_2$-Absorber (14) zugeleitet wird, ändert und eine Zuleitungsmenge eines gesättigten Dampfes (S), der einer Regenerierungsheizvorrichtung (31) des Regenerators (15) der $CO_2$-absorbierenden Lösung zugeleitet wird, ändert, um einen Differenzwert zwischen dem gemessenen Ist-Wert und dem Soll-Wert der $CO_2$-Rückgewinnungsrate so zu regeln, dass er in einem vorbestimmten Bereich liegt, und
eine $CO_2$-Rückgewinnungsmengensteuereinheit (112), die basierend auf einem tatsächlich gemessenen Ist-Wert einer von einem zweiten Sensor (103) in dem Gas, das aus dem Regenerator der $CO_2$-absorbierenden Lösung an die Umgebung abgegeben wird, ermittelten $CO_2$-Rückgewinnungsmenge und einem Soll-Wert der $CO_2$-Rückgewinnungsmenge, die Zirkulationsmenge der $CO_2$-absorbierenden Lösung, die dem $CO_2$-Absorber zugeleitet wird, ändert und die Zuleitungsmenge des gesättigten Dampfes, der einer Regenerierungsheizvorrichtung des Regenerators für $CO_2$-absorbierende Lösung zugeleitet wird, ändert, um einen Differenzwert zwischen dem gemessenen Ist-Wert und dem Soll-Wert der $CO_2$-Rückgewinnungsmenge so zu regeln, dass er in einem vorbestimmten Bereich liegt.

2. $CO_2$-Rückgewinnungseinheit nach Anspruch 1, wobei

die $CO_2$-Rückgewinnungseinheit (1) sowohl die $CO_2$-Rückgewinnungsraten-steuereinheit (111) als auch die $CO_2$-Rückgewinnungsmengensteuereinheit (112) aufweist.

3. $CO_2$-Rückgewinnungseinheit nach Anspruch 2,

wobei die $CO_2$-Rückgewinnungsmengensteuereinheit (112) die $CO_2$-Rückgewinnungsmenge basierend auf dem Differenzwert zwischen dem gemessenen Ist-Wert und dem Soll-Wert der $CO_2$-Rückgewinnungsmenge

mittels Proportional-Rechnung und Integral-Rechnung regelt.

4.  CO$_2$-Rückgewinnungseinheit nach einem der Ansprüche 2 bis 3,

    wobei die CO$_2$-Rückgewinnungsratensteuereinheit (111) die CO$_2$-Rückgewinnungsrate basierend auf dem Differenzwert zwischen dem gemessenen Ist-Wert und dem Soll-Wert der CO$_2$-Rückgewinnungsrate mittels Proportional-Rechnung und Integral-Rechnung regelt.

5.  CO$_2$-Rückgewinnungseinheit nach einem der Ansprüche 2 bis 4,

    wobei die CO$_2$-Rückgewinnungsratensteuereinheit (111) über einen ersten Regelmodus verfügt, in dem die Zirkulationsmenge und die Zuleitungsmenge des gesättigten Dampfes durchgehend berechnet und geregelt werden, und über einen zweiten Regelmodus verfügt, in dem die Berechnung nicht durchgehend erfolgt und die Zirkulationsmenge und die Zuleitungsmenge des gesättigten Dampfes für den jeweiligen vorbestimmten Zeitraum berechnet und geregelt werden, und
    wobei die CO$_2$-Rückgewinnungsmengensteuereinheit (112) über einen ersten Regelmodus verfügt, in dem die Zirkulationsmenge und die Zuleitungsmenge des gesättigten Dampfes durchgehend berechnet und geregelt werden, und über einen zweiten Regelmodus verfügt, in dem die Berechnung nicht durchgehend erfolgt und die Zirkulationsmenge und die Zuleitungsmenge des gesättigten Dampfes für den jeweiligen vorbestimmten Zeitraum berechnet und geregelt werden.

6.  CO$_2$-Rückgewinnungseinheit nach Anspruch 5,

    wobei bewirkt wird, dass entweder die CO$_2$-Rückgewinnungsratensteuereinheit (111) oder die CO$_2$-Rückgewinnungsmengensteuereinheit (112) sich in dem ersten Regelmodus befindet und die jeweils andere Einheit sich in dem zweiten Regelmodus befindet.

7.  CO$_2$-Rückgewinnungseinheit nach Anspruch 5,

    wobei bewirkt wird, dass die CO$_2$-Rückgewinnungsratensteuereinheit (111) sich in einem ersten Regelmodus befindet,
    wobei bewirkt wird, dass die CO$_2$-Rückgewinnungsmengensteuereinheit (112) sich in einem ersten Regelmodus befindet, und
    wobei die Regelung erfolgt, indem entweder für die CO$_2$-Rückgewinnungs-mengensteuereinheit oder für die CO$_2$-Rückgewinnungsratensteuereinheit eine Totzone vorgesehen wird.

8.  CO$_2$-Rückgewinnungsverfahren umfassend:

    einen Prozess, in dem in einem CO$_2$-Absorber (14) ein zu behandelndes Gas (11A) und eine CO$_2$-absorbierende Lösung (13) miteinander in Kontakt gebracht werden, um zu bewirken, dass das in dem zu behandelnden Gas enthaltene CO$_2$ von der CO$_2$-absorbierenden Lösung absorbiert wird, und die CO$_2$-absorbierende Lösung, die das CO$_2$ absorbiert hat, durch eine Zufuhrleitung (50) für reiche Lösung einem Regenerator (15) der CO$_2$-absorbierenden Lösung zugeleitet wird;
    einen Prozess, in dem in einem Regenerator (15) der CO$_2$-absorbierenden Lösung die CO$_2$-absorbierende Lösung, die das CO$_2$ absorbiert hat, erhitzt wird, CO$_2$ aus der CO$_2$-absorbierenden Lösung herausgelöst wird, die CO$_2$-absorbierende Lösung regeneriert wird und die CO$_2$-absorbierende Lösung, die regeneriert wurde, durch eine Zufuhrleitung (53) für arme Lösung zu dem CO$_2$-Absorber (14) geleitet wird;
    einen Prozess, in dem mittels eines ersten Sensors (102) eine CO$_2$-Konzentration in einem Rauchgas, das aus dem CO$_2$-Absorber (14) ausströmt, ermittelt wird;
    einen Prozess, in dem mittels eines zweiten Sensors (103) ein Gasdurchfluss und eine Konzentration eines CO$_2$-Gases (44), das aus dem Regenerator (15) der CO$_2$-absorbierenden Lösung ausströmt, ermittelt wird;
    und zumindest einen der beiden folgenden Regelvorgänge:

    Regelung einer Differenz zwischen einem gemessenen Ist-Wert und einem Soll-Wert einer Rückgewinnungsrate des CO$_2$ aus dem zu behandelnden Gas, sodass diese Rate in einem vorbestimmten Bereich liegt, indem basierend auf dem gemessenen Ist-Wert und dem Soll-Wert der Rückgewinnungsrate des CO$_2$ eine Zirkulationsmenge der CO$_2$-absorbierenden Lösung, die dem CO$_2$-Absorber (14) zugeleitet wird, und eine Zuleitungsmenge des gesättigten Dampfs (S), der einer Regenerierungsheizvorrichtung (31) der

$CO_2$-absorbierenden Lösung zugeleitet wird, geändert wird; und

Regelung einer Differenz zwischen einem gemessenen Ist-Wert, der durch den zweiten Sensor (103) ermittelt wurde, und einem Soll-Wert einer Rückgewinnungsmenge des $CO_2$, sodass die Differenz in einem vorbestimmten Bereich liegt, indem basierend auf dem gemessenen Ist-Wert und dem Soll-Wert der Rückgewinnungsmenge des vom Regenerator der $CO_2$-absorbierenden Lösung an die Umgebung abgegebenen $CO_2$ die Zirkulationsmenge der $CO_2$-absorbierenden Lösung, die dem $CO_2$-Absorber zugeleitet wird, und die Zuleitungsmenge des gesättigten Dampfes (S), der der Regenerierungsheizvorrichtung (31) des Regenerators der $CO_2$-absorbierenden Lösung zugeleitet wird, geändert wird.

9.  $CO_2$-Rückgewinnungsverfahren nach Anspruch 8,

wobei das $CO_2$-Rückgewinnungsverfahren sowohl die Regelung einer Differenz zwischen einem gemessenen Ist-Wert und einem Soll-Wert der Rückgewinnungsrate des $CO_2$, als auch die Regelung einer Differenz zwischen einem gemessenen Ist-Wert und einer Rückgewinnungsmenge des $CO_2$ aufweist.

10. $CO_2$-Rückgewinnungsverfahren nach Anspruch 9,

wobei die $CO_2$-Rückgewinnungsrate basierend auf dem Differenzwert zwischen dem gemessenen Ist-Wert und dem Soll-Wert der $CO_2$-Rückgewinnungsrate mittels einer Proportional-Rechnung und einer Integral-Rechnung geregelt wird.

11. $CO_2$-Rückgewinnungsverfahren nach einem der Ansprüche 9 und 10,

wobei die $CO_2$-Rückgewinnungsmenge basierend auf dem Differenzwert zwischen dem gemessenen Ist-Wert und dem Soll-Wert der $CO_2$-Rückgewinnungsmenge mittels einer Proportional-Rechnung und einer Integral-Rechnung geregelt wird.

12. $CO_2$-Rückgewinnungsverfahren nach einem der Ansprüche 9 bis 11,

wobei die $CO_2$-Rückgewinnungsrate und die $CO_2$-Rückgewinnungsmenge geregelt werden, indem zwischen einem ersten Regelmodus, in dem die Zirkulationsmenge und die Zuleitungsmenge des gesättigten Dampfes durchgehend berechnet und geregelt werden, und einem zweiten Regelmodus, in dem die Berechnung nicht durchgehend erfolgt und die Zirkulationsmenge und die Zuleitungsmenge des gesättigten Dampfes für den jeweiligen vorbestimmten Zeitraum berechnet und geregelt werden, umgeschaltet wird.

13. $CO_2$-Rückgewinnungsverfahren nach Anspruch 12,

wobei entweder die $CO_2$-Rückgewinnungsrate oder die $CO_2$-Rückgewinnungsmenge im ersten Regelmodus geregelt wird und der jeweils andere Wert im zweiten Regelmodus geregelt wird.

14. $CO_2$-Rückgewinnungsverfahren nach Anspruch 12,

wobei entweder die $CO_2$-Rückgewinnungsrate oder die $CO_2$-Rückgewinnungsmenge im ersten Regelmodus geregelt wird und entweder die $CO_2$-Rückgewinnungsmenge oder die $CO_2$-Rückgewinnungsrate geregelt wird, indem eine Totzone vorgesehen wird.

**Revendications**

1.  Unité de récupération de $CO_2$ (1) comprenant :

un absorbeur de $CO_2$ (14) qui amène en contact l'un avec l'autre un gaz qui est destiné à être traité (11A) et une solution absorbeuse de $CO_2$ (13) de manière à faire en sorte que le $CO_2$ qui est inclus dans le gaz qui est destiné à être traité (11A) soit absorbé dans la solution absorbeuse de $CO_2$ (13), et qui fournit la solution absorbeuse de $CO_2$ (13) qui a absorbé le $CO_2$ à un régénérateur de solution absorbeuse de $CO_2$ (15) par l'intermédiaire d'un tube d'alimentation en solution riche (50) ;
un régénérateur de solution absorbeuse de $CO_2$ (15) qui chauffe la solution absorbeuse de $CO_2$ qui a absorbé le $CO_2$, libère le $CO_2$ de la solution absorbeuse de $CO_2$, régénère la solution absorbeuse de $CO_2$ et fournit la

solution absorbeuse de $CO_2$ qui a été régénérée à l'absorbeur de $CO_2$ par l'intermédiaire d'un tube d'alimentation en solution pauvre (53) ;
un premier capteur (102) qui détecte une concentration de $CO_2$ dans un gaz de combustion (11C) qui s'échappe de l'absorbeur de $CO_2$ (14) ;
un second capteur (103) qui détecte un débit d'écoulement de gaz et une concentration d'un gaz de $CO_2$ (44) qui s'échappe du régénérateur de solution absorbeuse de $CO_2$ (15) ;
et au moins une unité prise parmi :

une unité de contrôle de taux de récupération de $CO_2$ (111) qui, sur la base d'une valeur mesurée réelle et d'une valeur cible d'un taux de récupération de $CO_2$ à partir du gaz qui est destiné à être traité, modifie une quantité de circulation de la solution absorbeuse de $CO_2$ qui est destinée à être fournie à l'absorbeur de $CO_2$ (14) et modifie une quantité d'alimentation de vapeur saturée (S) qui est destinée à être fournie à un moyen de chauffage de régénération (31) du régénérateur de solution absorbeuse de $CO_2$ (15) de manière à contrôler une valeur de différence entre la valeur mesurée réelle et la valeur cible du taux de récupération de $CO_2$ de telle sorte qu'elle se situe à l'intérieur d'une plage prédéterminée ; et
une unité de contrôle de quantité de récupération de $CO_2$ (112) qui, sur la base d'une valeur mesurée réelle d'une quantité de récupération de $CO_2$ qui est détectée par le second capteur (103) dans le gaz qui est libéré à l'extérieur depuis le régénérateur de solution absorbeuse de $CO_2$ et d'une valeur cible de la quantité de récupération de $CO_2$, modifie la quantité de circulation de la solution absorbeuse de $CO_2$ qui est destinée à être fournie à l'absorbeur de $CO_2$ et modifie la quantité d'alimentation de la vapeur saturée qui est destinée à être fournie au moyen de chauffage de régénération du régénérateur de solution absorbeuse de $CO_2$ de manière à contrôler une valeur de différence entre la valeur mesurée réelle et la valeur cible de la quantité de récupération de $CO_2$ de telle sorte qu'elle se situe à l'intérieur d'une plage prédéterminée.

2. Unité de récupération de $CO_2$ selon la revendication 1, dans laquelle
l'unité de récupération de $CO_2$ (1) comporte à la fois l'unité de contrôle de taux de récupération de $CO_2$ (111) et l'unité de contrôle de quantité de récupération de $CO_2$ (112).

3. Unité de récupération de $CO_2$ selon la revendication 2,
dans laquelle l'unité de contrôle de quantité de récupération de $CO_2$ (112) contrôle la quantité de récupération de $CO_2$ par l'intermédiaire d'un calcul de proportionnalité et d'un calcul d'intégration sur la base de la valeur de différence entre la valeur mesurée réelle et la valeur cible de la quantité de récupération de $CO_2$.

4. Unité de récupération de $CO_2$ selon l'une quelconque des revendications 2 à 3,
dans laquelle l'unité de contrôle de taux de récupération de $CO_2$ (111) contrôle le taux de récupération de $CO_2$ par l'intermédiaire d'un calcul de proportionnalité et d'un calcul d'intégration sur la base de la valeur de différence entre la valeur mesurée réelle et la valeur cible du taux de récupération de $CO_2$.

5. Unité de récupération de $CO_2$ selon l'une quelconque des revendications 2 à 4,
dans laquelle l'unité de contrôle de taux de récupération de $CO_2$ (111) inclut un premier mode de contrôle dans lequel la quantité de circulation et la quantité d'alimentation de la vapeur saturée sont calculées et sont contrôlées à tout instant, et un second mode de contrôle dans lequel le calcul n'est pas réalisé à tout instant et la quantité de circulation et la quantité d'alimentation de la vapeur saturée sont calculées et sont contrôlées pour chaque période prédéterminée ; et
dans laquelle l'unité de contrôle de quantité de récupération de $CO_2$ inclut un premier mode de contrôle dans lequel la quantité de circulation et la quantité d'alimentation de la vapeur saturée sont calculées et sont contrôlées à tout instant, et un second mode de contrôle dans lequel le calcul n'est pas réalisé à tout instant et la quantité de circulation et la quantité d'alimentation de la vapeur saturée sont calculées et sont contrôlées pour chaque période prédéterminée.

6. Unité de récupération de $CO_2$ selon la revendication 5,
dans laquelle une quelconque unité prise parmi l'unité de contrôle de taux de récupération de $CO_2$ (111) et l'unité de contrôle de quantité de récupération de $CO_2$ (112) est forcée à être dans le premier mode de contrôle et l'autre unité est forcée à être dans le second mode de contrôle.

7. Unité de récupération de $CO_2$ selon la revendication 5,
dans laquelle l'unité de contrôle de taux de récupération de $CO_2$ (111) est forcée à être dans un premier mode de contrôle,

dans laquelle l'unité de contrôle de quantité de récupération de $CO_2$ (112) est forcée à être dans un premier mode de contrôle, et

dans laquelle un contrôle est réalisée en munissant une quelconque unité prise parmi l'unité de contrôle de quantité de récupération de $CO_2$ et l'unité de contrôle de taux de récupération de $CO_2$ d'une bande morte.

8. Procédé de récupération de $CO_2$ comprenant :

un processus qui consiste à, dans un absorbeur de $CO_2$ (14), amener en contact l'un avec l'autre un gaz qui est destiné à être traité (11A) et une solution absorbe de $CO_2$ (13) de manière à faire en sorte que le $CO_2$ qui est inclus dans le gaz qui est destiné à être traité soit absorbé dans la solution absorbeuse de $CO_2$, et à alimenter la solution absorbeuse de $CO_2$ qui a absorbé le $CO_2$ jusqu'à un régénérateur de solution absorbeuse de $CO_2$ (15) par l'intermédiaire d'un tube d'alimentation en solution riche (50) ; et

un processus qui consiste à, dans un régénérateur de solution absorbeuse de $CO_2$ (15), chauffer la solution absorbeuse de $CO_2$ qui a absorbé le $CO_2$, à libérer le $CO_2$ de la solution absorbeuse de $CO_2$, et à régénérer la solution absorbeuse de $CO_2$ et à alimenter la solution absorbeuse de $CO_2$ qui a été régénérée sur l'absorbeur de $CO_2$ (14) par l'intermédiaire d'un tube d'alimentation en solution pauvre (53) ;

un processus qui consiste à détecter, au moyen d'un premier capteur (102), une concentration de $CO_2$ dans un gaz de combustion qui s'échappe de l'absorbeur de $CO_2$ (14) ;

un processus qui consiste à détecter, au moyen d'un second capteur (103), un débit d'écoulement de gaz et une concentration d'un gaz de $CO_2$ (44) qui s'échappe depuis le régénérateur de solution absorbeuse de $CO_2$ (15) ;

dans lequel au moins un contrôle prise parmi :

le contrôle d'une différence entre une valeur mesurée réelle et une valeur cible d'un taux de récupération du $CO_2$ à partir du gaz qui est destiné à être traité de telle sorte qu'elle soit à l'intérieur d'une plage prédéterminée en modifiant, sur la base de la valeur mesurée réelle et de la valeur cible du taux de récupération de $CO_2$, une quantité de circulation de la solution absorbeuse de $CO_2$ qui est destinée à être fournie à l'absorbeur de $CO_2$ (14) et une quantité d'alimentation de vapeur saturée (S) qui est destinée à être fournie à un moyen de chauffage de régénération (31) de la solution absorbeuse de $CO_2$, et

le contrôle d'une différence entre une valeur mesurée réelle qui est détectée au moyen du second capteur (103) et une valeur cible d'une quantité de récupération de $CO_2$ de telle sorte que la différence soit à l'intérieur d'une plage prédéterminée en modifiant, sur la base de la valeur mesurée réelle et de la valeur cible de la quantité de récupération du $CO_2$ qui est libéré à l'extérieur depuis le régénérateur de solution absorbeuse de $CO_2$, la quantité de circulation de la solution absorbeuse de $CO_2$ qui est destinée à être fournie à l'absorbeur de $CO_2$ et la quantité d'alimentation de la vapeur saturée (S) qui est destinée à être fournie au moyen de chauffage de régénération du régénérateur de solution absorbeuse de $CO_2$.

9. Procédé de récupération de $CO_2$ selon la revendication 8, dans lequel le procédé de récupération de $CO_2$ comporte à la fois le contrôle d'une différence entre une valeur mesurée réelle et une valeur cible d'un taux de récupération du $CO_2$ et le contrôle d'une différence entre une valeur mesurée réelle et une valeur cible d'une quantité de récupération de $CO_2$.

10. Procédé de récupération de $CO_2$ selon la revendication 9, dans lequel le taux de récupération de $CO_2$ est contrôlé par l'intermédiaire d'un calcul de proportionnalité et d'un calcul d'intégration sur la base de la valeur de différence entre la valeur mesurée réelle et la valeur cible du taux de récupération de $CO_2$.

11. Procédé de récupération de $CO_2$ selon l'une quelconque des revendications 9 et 10, dans lequel la quantité de récupération de $CO_2$ est contrôlée par l'intermédiaire d'un calcul de proportionnalité et d'un calcul d'intégration sur la base de la valeur de différence entre la valeur mesurée réelle et la valeur cible de la quantité de récupération de $CO_2$.

12. Procédé de récupération de $CO_2$ selon l'une quelconque des revendications 9 à 11, dans lequel le taux de récupération de $CO_2$ et la quantité de récupération de $CO_2$ sont contrôlés en effectuant une commutation entre un premier mode de contrôle dans lequel la quantité de circulation et la quantité d'alimentation de la vapeur saturée sont calculées et sont contrôlées à tout instant, et un second mode de contrôle dans lequel le calcul n'est pas réalisé à tout instant et la quantité de circulation et la quantité d'alimentation de la vapeur saturée sont calculées et sont contrôlées pour chaque période prédéterminée.

**13.** Procédé de récupération de CO$_2$ selon la revendication 12,
dans lequel une valeur quelconque prise parmi le taux de récupération de CO$_2$ et la quantité de récupération de CO$_2$ est contrôlée dans le premier mode de contrôle, et l'autre valeur est contrôlée dans le second mode de contrôle.

**14.** Procédé de récupération de CO$_2$ selon la revendication 12,
dans lequel le taux de récupération de CO$_2$ et la quantité de récupération de CO$_2$ sont contrôlés dans le premier mode de contrôle, et une valeur quelconque prise parmi la quantité de récupération de CO$_2$ et le taux de récupération de CO$_2$ est contrôlée en prévoyant une bande morte.

FIG. 1

# FIG. 2

FIG. 3

```
          ┌─────────────┐
          │    START    │
          └─────────────┘
                 │
                 ▼                          ⌇ST11
  ┌────────────────────────────────────────────┐
  │     OPERATION ON THE BASIS OF SET VALUES    │
  └────────────────────────────────────────────┘
                 │
                 ▼                          ⌇ST12
  ┌────────────────────────────────────────────┐
  │  MEASURE ACTUAL MEASURED VALUES OF CO₂      │
  │  RECOVERY RATE AND CO₂ RECOVERY AMOUNT      │
  └────────────────────────────────────────────┘
                 │
                 ▼                          ⌇ST13
  ┌────────────────────────────────────────────┐
  │  CORRECT SET VAUES USING CO₂ RECOVERY       │
  │  RATE CONTROL UNIT AND CO₂ RECOVERY         │
  │  AMOUNT CONTROL UNIT                        │
  └────────────────────────────────────────────┘
                 │
                 ▼                          ⌇ST14
  ┌────────────────────────────────────────────┐
  │     OPERATION ON THE BASIS OF SET VALUES    │
  └────────────────────────────────────────────┘
                 │
                 ▼
          ┌─────────────┐
          │     END     │
          └─────────────┘
```

MEASURE ACTUAL MEASURED VALUES OF $CO_2$ RECOVERY RATE AND $CO_2$ RECOVERY AMOUNT

CORRECT SET VAUES USING $CO_2$ RECOVERY RATE CONTROL UNIT AND $CO_2$ RECOVERY AMOUNT CONTROL UNIT

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5237204 B

- US 20120167760 A